# EUROPÄISCHE PATENTANMELDUNG

(11) **EP 0 674 885 A1**
(43) Veröffentlichungstag der Anmeldung: **04.10.1995**
(21) Anmeldenummer: 95104919.6
(22) Anmeldetag: 03.04.1995
(51) Int. Cl.: A61C 15/04

(54) **Halter für Zahnseide**

(30) Priorität: 02.04.1994 DE 4411640
(71) Anmelder: Gega, Josef, D-45884 Gelsenkirchen (DE)
(72) Erfinder: Schüssler, Michael, D 45239 Essen-Werden (DE)
(74) Vertreter: Thiel, Christian, Dr. Dipl.-Chem.

(57) **Zusammenfassung**

Ein Halter für Zahnseide weist einen Griffkörper (2) mit einer Aufnahme für eine Vorratsspule (3) und eine Arretierung, einen mit dem Griffkörper (2) verbundenen Arm (5) mit einer Führung (9) für die Zahnseide, einen an den Arm (5) anschliependen Bügel (6), über den die Zahnseide gespannt wird sowie eine Spannvorrichtung (7) für die Zahnseide auf.

## Beschreibung

Die Erfindung betrifft einen Halter für Zahnseide, mit dem die Zahnzwischenräume des menschlichen Gebisses gesäubert werden können und der es erlaubt, mittels einfacher Maßnahmen gebrauchte Zahnseide durch neue aus einer Vorratsspule zu ersetzen.

Zahnseide ist ein erprobtes Mittel, um schlecht zugängliche Teile des Gebisses, insbesondere die Zwischenräume zwischen den Zähnen, von Ablagerungen zu reinigen. Zur Handhabung wird die Zahnseide zwischen zwei Fingern gespannt, wozu etwa 25 bis 30 cm Material benötigt werden, da die Seide zur Fixierung mehrfach um die Finger geschlungen werden muß. Im übrigen bedarf es eines großen Maßes an Fingerfertigkeit, um an schlecht zugänglichen Teilen des Gebisses ein befriedigendes Reinigungsergebnis zu erzielen, was insbesondere für die tiefer im Mundraum liegenden Zähne und die hinten liegenden Zahnwände gilt. Bei ungeschickter Handhabung kann es zu Schnittverletzungen und Überdehnungen im Lippenbereich kommen.

Angesichts der Schwierigkeit, mit dem herkömmlichen Verfahren zu einem befriedigenden und schnellen Reinigungsergebnis zu kommen, besteht ein Bedarf an einem Halter für Zahnseide, mit der es möglich ist, einen Zahnseidestrang problemlos in den Mund und zwischen die Zähne einzuführen und die zur Reinigung erforderlichen Hub- und Zugbewegungen durchzuführen.

Diese Aufgabe wird mit einem Halter für Zahnseide mit einem Griffkörper, der eine Aufnahme für eine Vorratsspule und eine Arretierung aufweist, einem mit dem Griffkörper verbundenen Arm mit einer Führung für die Zahnseide, einen an den Arm anschließenden Bügel, über den die Zahnseide gespannt wird sowie einer Spannvorrichtung für die Zahnseide gelöst.

Der erfindungsgemäße Halter weist in seinem Griffkörper eine Aufnahme für eine Zahnseidespule auf, von der ein Zahnseidestrang durch eine Führung durch den Arm in den Bügelbereich geführt wird. Der Zahnseidestrang wird dann zur und über die freie Seite des Bügels geführt und in einer Spannvorrichtung gehalten, die zugleich die zur Betätigung notwendige Spannung gegen eine Arretierung im Griffkörper herbeiführt. Frische Zahnseide kann aus der Vorratsspule nachgezogen werden, verbrauchte Zahnseide mit einer ggf. vorhandenen Schneidevorrichtung abgeschnitten werden.

Für eine optimale Wirkungsweise des erfindungsgemäßen Halters ist eine gegenüber dem Haltearm abgekröpfte Anordnung des Spannbügels vorteilhaft. Auf diese Art und Weise wird der Zugang zu den Zahnzwischenräumen erleichtert, wobei die durch die Anatomie bedingte spiegelsymmetrische Ausbildung des Ober- wie des Unterkiefers zwei spiegelsymmetrisch zueinander angeordnete Arbeitspositionen des Bügels als vorteilhaft erscheinen lassen. Um nicht auf zwei Halter mit spiegelsymmetrischen Bügelstellungen (rechts bzw. links) angewiesen zu sein, ist es zweckmäßig, den Bügel schwenkbar zu lagern, um ihn aus einer links in eine rechts abgewinkelte Stellung zu überführen. Dies kann beispielsweise dadurch erfolgen, daß der Bügel über ein Scharnier am Arm schwenkbar gelagert ist, oder aber daß der abgewinkelte Bügel um eine durch seine Längsrichtung verlaufende Achse um 180° geschwenkt werden kann. Für den Fall, daß ein Scharnier vorgesehen ist, kann dieses beispielsweise durch ein Federelement definierte Rastpunkte aufweisen, um den Halter in der jeweils gewünschten Position einzurasten.

Es sind auch mehrere Rastpositionen denkbar, beispielsweise zwei auf jeder Seite, um eine optimale Kröpfung des Bügels für den jeweiligen Einsatzort im Gebiss zu erzielen.

Die auf der Vorratsspule aufgewickelte Zahnseide wird dem Spannbügel über eine Führung zugeführt, wobei diese Führung innerhalb des Arms verlaufen kann oder als Nut oder Eintiefung auf der Oberfläche des Arms ausgebildet sein kann, vorzugsweise auf der Oberseite. Die Einführung eines neuen Zahnseidestrangs bei einer innerhalb des Arms verlaufenden Führung kann beispielsweise durch Einlegen nach Öffnen des Arms oder Einsaugen mit dem Mund erfolgen.

Verläuft der Zahnseidestrang in einer Nut oder Eintiefung an der Oberfläche des Arms, ist das Einlegen kein Problem.

Der Griffkörper zur Aufnahme der Vorratsspule besteht vorzugsweise aus zwei Halbschalen, von denen eine erste lösbar und gegen die zweite drehbar ausgebildet ist. Die zweite Halbschale dient insoweit als Widerlager und enthält zwecksmäßigerweise eine Welle, auf die die Spule aufgeschoben und auf der sie in fixierter Position gehalten wird. Eine von außen betätigbare Arretierung, die beispielsweise aus einem mit einem Ritzel zusammenwirkenden Federelement besteht, das ein aus dem Griffkörper herausragendes Auslöseelement aufweist, wobei das Ritzel an der Welle gelagert ist, sorgt dafür, daß der Zahnseidestrang nur nach Auslösung freigegeben wird. Über eine Drehbewegung der ersten Halbschale gegenüber der zweiten Halbschale, bei der die Welle mit darauf fixierter Spule bewegt wird, kann der Zahnseidestrang zu einen gegen die Spannvorrichtung im Bügelbereich gespannt werden, zum anderen zur Erneuerung freigegeben werden.

Der Zahnseidestrang wird von der Vorratsspule in der Führung zum Bügel und dort innerhalb einer Nut zur freien Seite des Bügels geführt, der überspannt wird. Zur Fixierung in der gewünschten Position am Bügel kann der Faden durch Bohrungen oder in Eintiefungen in den Bügelarmen geführt sein.

Um die für den Reinigungsprozeß notwendige Spannung des Zahnseidefadens zu erreichen, ist es notwendig, diesen in einer Spannvorrichtung festzulegen. Diese kann beispielsweise als Bohrung oder Nut mit einem Halteelement am Bügel selbst oder im angrenzenden Teil des Arms ausgebildet sein. Als Halteelement kommt beispielsweise ein in die Bohrung eingreifendes Schraub- oder Federelement in Frage. Das Element preßt den durch die Bohrung oder in der Nut geführten Faden gegen beispielsweise die Wandung oder in eine Eintiefung. Als Spannvorrichtung mit integriertem Halteelement kommt weiterhin auch eine Nut mit S-förmigem Verlauf in Frage, in deren Krümmungen der Faden in Einengungen hineingezogen und festgelegt wird. Bevorzugt ist aber aus ökonomischen und hygienischen Gründen die Anordnung der Spannvorrichtung am inneren Bügelarm in einer Bohrung, durch die der Zahnseidestrang verläuft.

Zweckmäßigerweise enthält der erfindungsgemäße Halter des weiteren eine Schneidevorrichtung, mit der gebrauchte Zahnseide unmittelbar nach Gebrauch abgetrennt werden kann. Diese Schneidevorrichtung kann in das Halteelement der Spannvorrichtung integriert sein, so daß überstehende Teile des Fadens sofort abgetrennt werden können. Befindet sich die Schneidevorrichtung im Bereich des Bügels, sollte sie versenkt angeordnet sein, um bei Gebrauch Verletzungen auszuschließen. Eine geeignete Schneidevorrichtung besteht beispielsweise aus einer Klinge oder Schneide, die beispielsweise an der Flanke einer sich nach innen hin verengenden Kerbe oder Nut ausgebildet ist oder Teil des Halteelements ist.

Abgesehen von einer einfachen Handhabung hat der erfindungsgemäße Halter für Zahnseide den Vorzug, daß für jeden Säuberungsprozeß nur eine relativ geringfügige Länge des Zahnseidefadens benötigt wird, beispielsweise etwa 50 mm bei einer Bügelspannweite von etwa 20 mm.

Die Erfindung wird durch die anliegenden Darstellungen näher erläutert. Von diesen zeigt
- Fig. 1: einen erfindungsgemäßen Halter für Zahnseide in seitlicher Ansicht;
- Fig. 2: die Darstellung von Fig. 1 in der Draufsicht;
- Fig. 3: eine Ausführungsform eines Griffkörpers;
- Fig. 4: ein Ritzel mit Federdorn, wie er erfindungsgemäß als Arretierung zum Einsatz kommen kann;
- Fig. 5: eine Spannvorrichtung, wie sie erfindungsgemäß eingesetzt werden kann;
- Fig. 6: eine weitere Ausführungsform eines Bügels mit Spannvorrichtung; und
- Fig. 7: ein Halteelement für die Ausführungsform von Fig. 6.

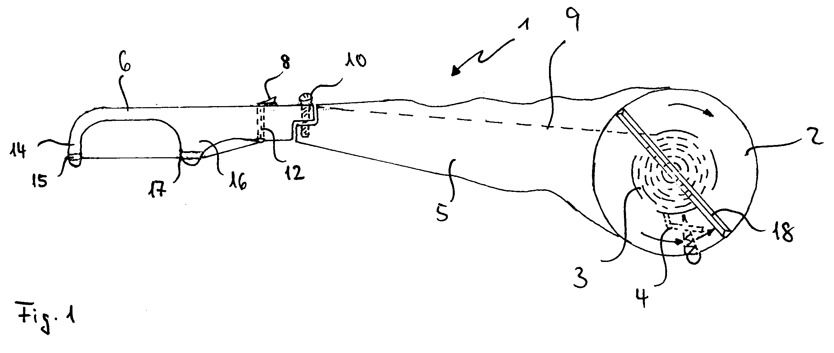

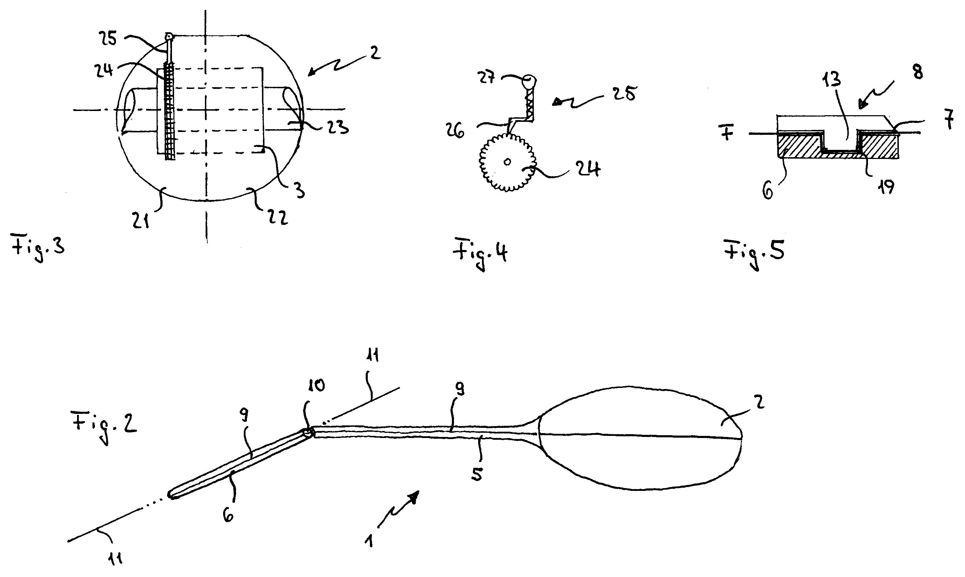

Der Halter 1 gemäß Fig. 1 besteht aus einem Griffkörper 2, in dessen Inneren sich (angedeutet dargestellt) eine Vorratsspule 3 befindet, die über eine Arretierung 4 gegen ungewollte Drehbewegungen abgesichert ist. Der Griffkörper 2 geht in einen Haltearm 5 über, der seinerseits mit dem Spannbügel 6 verbunden ist. Die Verbindung von Arm 5 und Bügel 6 erfolgt über ein Scharnierelement 10, hier als senkrecht verlaufendes Schraubelement dargestellt. Andere Ausführungsformen sind denkbar, beispielsweise in Form eines Bolzens, eines Federelements, das den Bügel 6 in zwei spiegelsymmetrisch zu einer gemeinsamen Mittelachse angeordneten Positionen lösbar arretiert, oder auch eine Ausführungsform, bei der der bereits abgewinkelte Bügel 6 gegenüber dem Arm 5 um seine Längsachse 11 (s. Fig. 2) um 180° drehbar ist, so daß die von der Zahnseite überspannte freie Seite auf der Abbildung nach oben weist.

Mit der schwenkbaren bzw. drehbaren Anordnung des Bügels 6 gegenüber dem Arm 5 kann der Bügel in eine linke und eine rechte Position gebracht werden, wie sie zur optimalen Bearbeitung der Zahnzwischenräume auf den linken und rechten Hälften des Kiefers jeweils optimal ist. Es hat sich gezeigt, daß ein Kröpfungswinkel von 15 bis 45° sinnvoll ist.

Im Bereich des Bügels 6 befindet sich eine Spannvorrichtung 8, mit der der Zahnseidestrang gegen die arretierte Spule 3 verspannt wird. Dies kann durch Straffen per Hand oder mit Hilfe des Griffes 18 über die Spule 3 erfolgen.

Der Zahnseidestrang selbst wird jeweils von der Vorratsrolle 3 abgewickelt, wozu die Arretierung 4 gelöst wird, und verläuft in der Führung 9, die sich im Inneren oder an der Oberfläche des Arms 5 befinden kann, zum Bügel 6, um dort in einer Nut 9 an dessen Oberseite zum Arm 14 und einer durch den Arm geführten Bohrung 15 über die freie Seite des Bügels 6 zu verlaufen, um in einer Bohrung 16 des zweiten Arms 17 durch einen Kanal 12 zum Spannelement 8 zu verlaufen.

Fig. 2 zeigt den Halter für Zahnseide gemäß Fig. 1 in der Draufsicht. An den Griffkörper 2 schließt sich der Haltearm 5 an, der über das Scharnier 10 in den abgekröpften Bügel 6 übergeht. Auf der Oberseite des Arms 5 wie des Bügels 6 verläuft die Nut, in der die Zahnseide zur freien Seite des Bügels 6 geführt wird, um danach in der Spannvorrichtung 8 arretiert zu werden. Alternativ zum Scharnier kann eine um die Achse 11 drehbare Anordnung des Bügels 6 vorgesehen sein.

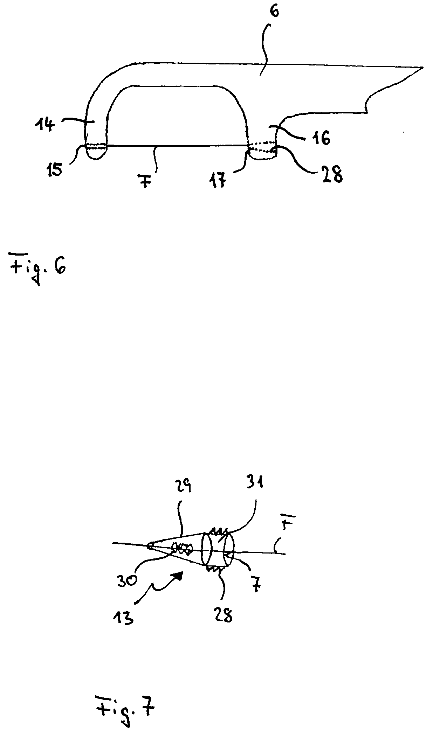

Fig. 3 zeigt den Griffkörper 2 mit der ersten, drehbaren Halbschale 21, die den in Fig. 1 gezeigten Griff 18 aufweist, und der zweiten, feststehenden Halbschale 22 und darin eingesetzter Welle 23, die mit ersten Halbschale 21 auf eine Weise verbunden ist, das sie gedreht werden kann, und in der zweiten Halbschale 22 gelagert ist (Verbindung und Lagerung nicht gezeigt). Auf der Welle 23 befindet sich die Spule 3 in festgelegter Position. Eine Ritzelscheibe 24, die hier als Teil der Spule 3 dargestellt ist, aber auch Bestandteil der Welle 23 sein kann, ist mit einem Federelement 25 verbunden, dessen Kopf durch die zweite Halbschale 22 hindurch von außen betätigbar ist, so daß die Spule freigegeben wird. Ritzelscheibe 24 und Federelement 25 sind zweckmäßigerweise so zueinander angeordnet, daß ein Vorspannen des Fadens über die Spule 3 ohne Lösen der Arretierung möglich ist, jedoch das Abwickeln weiteren Fadens durch den Federdorn bis zu dessen Lösung blockiert wird.

Fig. 4 zeigt die Funktionsweise der Arretierung 4, mit der die Spule 3 freigegeben werden kann. Die Ritzelscheibe 24 wird durch den Dorn 26 der Arretierung 25 blockiert. Durch Herabdrücken des Knopfes 27 wird die Arretierung gelöst, so daß die Ritzelscheibe mit daran befindlicher Welle und/oder Spule frei beweglich wird. Der Federdorn 26 ist ist so ausgebildet, daß er die Rotation der Ritzelscheibe 24 nur in der Abspulrichtung blockiert, nicht aber in der Spannvorrichtung.

Fig. 5 zeigt eine Ausführungsform einer Spannvorrichtung 8, wie sie erfindungsgemäß am Bügel 6 vorgesehen sein kann. Der Faden F verläuft innerhalb einer Nut 12, die ihrerseits eine Eintiefung 19 aufweist. In diese Eintiefung 19 greift die Spannvorrichtung 8 mit dem Vorsprung 13 ein, so daß der Faden F in die Vertiefung 19 eingepreßt und darin kraftschlüssig gehalten wird. Das Halteelement selbst wiederum kann durch ein Feder- oder ein Schraubelement betätigt sein. Dabei kann eine Kante des Halteelements zugleich als Schneidevorrichtung 7 ausgebildet sein, an der der Faden durch einfaches Entlangführen durchtrennt werden kann.

Andere Ausführungsformen der Spannvorrichtung 8 sind ohne weiteres möglich, auch solche, die ohne bewegliche oder verstellbare Teile auskommen. So ist es denkbar, daß der Faden nach überqueren der freien Bügelseite in eine oder mehrere hintereinander angeordnete, sich ins Innere hinein verjüngende Einkerbungen, die eine Krümmung aufweisen können, hineingezogen wird, und dort klemmend festgehalten wird. Eine entsprechende kerbförmige Eintiefung kann in ihrem Inneren mit einer vorsprengenden Schneide ausgestattet sein, an der der Faden abgeschnitten werden kann.

Fig. 6 zeigt eine weitere Ausführungsform des Bügels 6 mit integrierter Spannvorrichtung 8. Der Zahnseidestrang verläuft nicht sichtbar auf der Oberseite des Bügels 6 hinab zum äußeren Bügelarm 14 durch die Bohrung 15 über die freie Seite des Bügels zur Bohrung 17 im inneren Bügelarm oder -schenkel 16. Die Bohrung 17 erweitert sich in ihrem Verlauf durch den Bügelarm 16 konisch und weist im Bereich ihres Austritts ein Gewinde 28 auf. Von der Gewindeseite her wird ein Halteelement 13 in Form einer Konusspannhülse mit Außengewinde 29 an der mit dem Gewinde 28 ausgestatteten Seite in die Bohrung 17 eingeschraubt. Der Zahnseidestrang verläuft innerhalb der Spannhülse 13, die im Bereich ihres konischen Verlaufs einen Einschnitt aufweist, der beim Eindrehen in die Bohrung 17 zusammengepreßt wird und den Zahnseidestrang einklemmt.

Fig. 7 zeigt eine Ausführungsform einer solchen Konusspannhülse mit eingelegtem Faden F. Im äußeren, zylinderischen Teil befindet sich ein umlaufendes Außengewinde 28. Der innere, konische Teil 29 weist in seinem Inneren Klemmelemente 30 auf, die beim Einschrauben der Spannhülse 13 in die Bohrung 17 gegeneinandergepreßt werden und den hindurchverlaufenden Strang F einklemmen. Die Spannhülse weist entweder einen über die gesamte Länge laufenden Einschnitt auf, durch den auch der Strang F eingelegt werden kann, oder einen Einschnitt im konischen Teil, der das für den Spannvorgang nötige Spiel der dadurch definierten Segmente gegeneinander ermöglicht. Im Kopf 31 der Hülse 13, der das umlaufende Außengewinde 28 aufweist, kann versenkt eine Schneidevorrichtung 7 angeordnet sein, mit der der eingeklemmte Faden F abgeschnitten werden kann, indem er durch kräftigen Zug gegen die versenkte Schneide bewegt wird.

Alternativ zu der hier dargestellten Spannvorrichtung 8 aus Bohrung 17 und Spannhülse 13 können auch andere am Bügelarm 16 angeordnete Spannvorrichtungen eingesetzt werden. Denkbar ist beispielsweise eine am Bügelarm 16 verlaufende Nut 17, in der der Zahnseidestrang verläuft, in Kombination mit einem Halteelement 13 der in Fig. 5 gezeigten Art, das an einem Scharnier gelagert ist und mit einer Klappbewegung auf den in der Nut 17 verlaufenden Strang F geklappt wird, in einer Rastposition einrastet und den Strang F klemmend festhält.

## Patentansprüche

1. Halter für Zahnseide, gekennzeichnet durch einen Griffkörper (2), der eine Aufnahme für eine Vorratsspule (3) und eine Arretierung (4) aufweist, einen mit dem Griffkörper (2) verbundenen Arm (5) mit einer Führung (9) für die Zahnseide, einen an den Arm (5) anschließenden Bügel (6), über den die Zahnseide gespannt wird sowie eine Spannvorrichtung (8) für die Zahnseide.

2. Halter nach Anspruch 1, dadurch gekennzeichnet, daß der Bügel (6) gegenüber dem Arm (5) gekröpft angeordnet ist.

3. Halter nach Anspruch 1, dadurch gekennzeichnet, daß der Bügel (6) am Arm (5) schwenkbar gelagert ist, wobei wenigstens zwei Positionen, die sich spiegelsymmetrisch zueinander verhalten, eingenommen werden können.

4. Halter nach Anspruch 3, dadurch gekennzeichnet, daß der Bügel (6) an einem Scharnier (10) gelagert ist.

5. Halter nach Anspruch 2, dadurch gekennzeichnet, daß der Bügel (6) um eine durch seine Längsrichtung verlaufende Achse (11) drehbar gelagert ist.

6. Halter nach einem der vorstehenden Ansprüche, dadurch gekennzeichnet, daß die Führung (9) innerhalb der Arms (5) verläuft.

7. Halter nach Anspruch 6, dadurch gekennzeichnet, daß die Führung (9) als Nut oder Eintiefung ausgebildet ist.

8. Halter nach einem der vorstehenden Ansprüche, dadurch gekennzeichnet, daß der Griffkörper (2) aus zwei Halbschalen (21, 22) besteht, von denen eine erste (21) lösbar und gegen die zweite (22) drehbar ausgebildet ist.

9. Halter nach Anspruch 8, dadurch gekennzeichnet, daß der Griffkörper (2) eine Welle (23) zur Aufnahme der Spule (3) aufweist.

10. Halter nach Anspruch 8, dadurch gekennzeichnet, daß die Arretierung (4) als mit einem Ritzel (24) zusammenwirkendes Federelement (25) ausgebildet ist, wobei das Ritzel (24) an der Welle (23) gelagert ist.

11. Halter nach einem der vorstehenden Ansprüche, dadurch gekennzeichnet, daß die Spannvorrichtung (8) als Bohrung oder Nut (12) mit einem Halteelement (13) ausgebildet ist.

12. Halter nach Anspruch 11, dadurch gekennzeichnet, daß das Halteelement (13) als Schraub-, Klemmoder Federelement ausgebildet ist.

13. Halter nach einem der vorstehenden Ansprüche, gekennzeichnet durch eine Schneidevorrichtung (7).

14. Halter nach Anspruch 13, dadurch gekennzeichnet, daß die Schneidevorrichtung (7) in das Halteelement (13) integriert ist.

15. Halter nach Anspruch 14, dadurch gekennzeichnet, daß die Spannvorrichtung (8) und die Schneidevorrichtung (7) im Bereich des Bügels (6) versenkt angeordnet sind.
